# EUROPÄISCHE PATENTANMELDUNG

(11) **EP 3 680 125 A1**
(43) Veröffentlichungstag der Anmeldung: **15.07.2020**
(21) Anmeldenummer: 19174686.6
(22) Anmeldetag: 15.05.2019
(51) Int. Cl.: B60L 53/64, B60L 53/63, B60L 53/68, B60L 53/51, B60L 53/53, B60L 53/30

(54) **VERFAHREN UND VORRICHTUNG ZUM LADEN EINES ELEKTROFAHRZEUGES**

(30) Priorität: 10.01.2019 AT 500182019
(71) Anmelder: FRONIUS INTERNATIONAL GmbH, 4643 Pettenbach (AT)
(72) Erfinder: SCHUBERT, Michael, 4643 Pettenbach (AT); BRANDSTÖTTER, Markus, 4643 Pettenbach (AT)
(74) Vertreter: Sonn & Partner Patentanwälte

(57) **Zusammenfassung**

Die Erfindung betrifft ein Verfahren und eine Vorrichtung (3) zum Laden eines Elektrofahrzeuges (11) mit einem Ladestrom (l_{L}), mit einem Anschluss (30) zur Verbindung mit einem mit einer Energieerzeugungsanlage (1), einem Energieversorgungsnetz (6), einer Energiemanagementeinrichtung (20), und allenfalls einem Energiespeicher (5) verbundenen Hausversorgungsnetz (16), mit einem Ladeanschluss (31) zur Verbindung mit dem zu ladenden Elektrofahrzeug (11), und mit einer Steuereinrichtung (27) zur Steuerung des Ladestroms (l_{L}) zum Laden des Elektrofahrzeuges (11). Zur optimalen Ausnutzung der Energie einer vorhandenen Energieerzeugungsanlage (1), beispielsweise einer Photovoltaikanlage, und somit einer besonders kostengünstigen und wirtschaftlichen Ladung des Elektrofahrzeuges (11) ist die Steuereinrichtung (27) zur Verbindung mit der Energiemanagementeinrichtung (20) ausgebildet, und sind zumindest zwei Ladeströme (l_{Li}) voreinstellbar, sodass der Ladestrom (l_{L}) zum Laden des Elektrofahrzeuges (11) in Abhängigkeit der Energiemanagementeinrichtung (20) entsprechend einem der zumindest zwei voreingestellten Ladeströme (l_{Li}) bereitgestellt ist.

## Beschreibung

Die Erfindung betrifft ein Verfahren zum Laden eines Elektrofahrzeuges mit einem Ladestrom aus einem mit einer Energieerzeugungsanlage, einem Energieversorgungsnetz, einer Energiemanagementeinrichtung, und allenfalls einem Energiespeicher verbundenen Hausversorgungsnetz, wobei der Ladestrom zum Laden des Elektrofahrzeuges über eine Steuereinrichtung gesteuert wird.

Weiters betrifft die Erfindung eine Vorrichtung zum Laden eines Elektrofahrzeuges mit einem Ladestrom, mit einem Anschluss zur Verbindung mit einem mit einer Energieerzeugungsanlage, einem Energieversorgungsnetz, einer Energiemanagementeinrichtung und allenfalls einem Energiespeicher verbundenen Hausversorgungsnetz, mit einem Ladeanschluss zur Verbindung mit dem zu ladenden Elektrofahrzeug, und mit einer Steuereinrichtung zur Steuerung des Ladestroms zum Laden des Elektrofahrzeuges.

Batterien eines Elektrofahrzeuges, eines Plug-in-Hybrid-Fahrzeuges oder anderer Fahrzeuge, bei denen höhere Ladeströme fließen (nachfolgend zusammenfassend als Elektrofahrzeug bezeichnet), werden nur mehr vereinzelt über Schuko-Steckdosen aufgeladen, da diese auf Dauer hohen Ladeströmen nicht standhalten und deswegen nur geringe Ladeleistungen ermöglichen. Immer häufiger kommen fix montierte Ladestationen, sogenannte Wallboxen, zum Einsatz, an denen das Elektrofahrzeug mittels eines Ladekabels, allenfalls mit einer In-Kabel-Kontrollbox (ICCB In Cable Control Box) mit sogenannten Typ 1 oder Typ 2 Ladestecker angeschlossen wird.

Betreiber einer regenerativen Energieerzeugungsanlage sind in vielen Fällen auch Betreiber eines Elektrofahrzeuges und wollen dieses aus Umweltgründen und nicht zuletzt aus wirtschaftlichen Gründen möglichst mit der selbst erzeugten Energie versorgen. Falls regenerative Energieerzeugungsanlagen nicht schon selbst unvermeidbare Leistungsschwankungen aufweisen, entstehen diese durch das Zu- und Wegschalten von Verbrauchern. Je nach maximaler Leistung der regenerativen Energieerzeugungsanlage und den damit verbundenen Verbrauchern, kommt es entweder zu einem Einspeisen von Energie in ein Energieversorgungsnetz oder zu einem Bezug von Energie aus dem Energieversorgungsnetz, dem sogenannten Netzbezug. Eine Möglichkeit zur besseren Abdeckung des Stromverbrauchs mit Eigenstrom bietet sich durch das Zu- und Wegschalten von Verbrauchern bzw. durch eine Regelung ihrer Leistungsaufnahme. So kann z.B. die Leistung einer Photovoltaikanlage, anstatt in das Energieversorgungsnetz eingespeist zu werden, für das Laden eines Energiespeichers verwendet werden.

Aus dem Stand der Technik sind Energiemanagementeinrichtungen bekannt, die mittels Zu- und Wegschalten von Verbrauchern eine Einspeisung und einen Netzbezug reduzieren. Aufgrund der niedrigen Einspeisetarife und der vergleichsweise hohen Tarife für den Netzbezug kann so die Wirtschaftlichkeit einer regenerativen Energieerzeugungsanlage erhöht werden.

Es ist auch bekannt, dass Energiemanagementeinrichtungen in dieser Form Ladestationen für das Laden von Elektrofahrzeugen über einen dafür an der Ladestation vorgesehenen Freigabeeingang zu- bzw. wegschalten können. Das stellt die einfachste Variante einer Ladesteuerung dar. Es gibt weiters Ladestationen, die über eine stufenlose Regelung des Ladestroms verfügen, um den Verbrauch möglichst genau an eine vorhandene Überschussleistung einer regenerativen Energieerzeugungsanlage anzupassen. Derartige Ladestationen sind aufgrund des höheren technischen Aufwands mit vergleichsweise hohen Anschaffungskosten verbunden. Speziell bei regenerativen Energieerzeugungsanlagen mit kleinerer Nennleistung, wie sie beispielsweise im Haushaltsbereich zu finden sind, werden diese Ladestationen oft in Leistungsbereichen betrieben, in welchen die Regelung nicht optimal zur Geltung kommen kann, da ein Ladestrom resultieren würde, der unterhalb eines Mindestladestroms für ein Elektrofahrzeug liegt. Rechnet man beispielsweise einen Mindestladestrom von 6A auf die Leistung um, ergibt sich für eine einphasige Ladung mit 230V eine minimale Ladeleistung von 1,38 kW. Bei der dreiphasigen Ladung liegt die minimale Ladeleistung bei 4,14 kW. Speziell bei kleinen Anlagen erschweren diese unteren Grenzen der Ladeleistung die Regelung einer Ladung eines Elektrofahrzeuges nach Energieüberschuss einer Energieerzeugungsanlage. Es gibt zudem ältere Elektrofahrzeuge, die höhere minimale Ladeströme benötigen (z.B. 12 A), wodurch der Regelbereich für die Ladeleistung bei höheren Werten beginnt (z.B. einphasig: 2,76 kW). In ähnlicher Weise sind nur zu- und wegschaltbare Ladestationen eingeschränkt, wenn ein etwas größerer Leistungsbereich abgedeckt werden soll.

Zurzeit beschränkt sich die Heimladung von Elektrofahrzeugen auf die Wechselstromladung, die AC-Ladung. Die Gleichstromladung bzw. DC-Ladung wird aktuell nur bei Ladestationen mit hohen Ladeleistungen verwendet, die im Eigenheim in Anbetracht der Anschaffungskosten weder wirtschaftlich noch aus Gründen der Ladedauer notwendig sind. Neue Elektrofahrzeuge mit relativ hohen Reichweiten (z.B.: >250 km) bieten selbst bei weiten Arbeitstrecken (z.B.: 100 km) noch immer genügend Reserve, um eine Ausfahrt am Abend problemlos zu ermöglichen. Eine akute Schnellladung ist also im Normalfall nicht notwendig. Das Elektrofahrzeug kann mit niedrigen Ladeleistungen über Nacht oder auf die Überschussleistung optimiert geladen werden. In wirklich dringenden Fällen gibt es bereits heute (je nach Region) ein relativ dichtes Netz an DC-Schnellladestationen, bei denen innerhalb von kurzer Zeit hohe Energiemengen übertragen werden können. Der Besitzer des Elektrofahrzeuges fährt dabei ähnlich wie beim Tanken von fossilen Energieträgern an einer Tankstelle zur Schnellladestation und lädt dort das Elektrofahrzeug innerhalb von Minuten auf.

Ladestationen werden üblicherweise fix installiert, wobei verschiedene Schutzvorrichtungen und Kommunikationsvorrichtungen in der Ladestation selbst integriert sind. Durch Funktionen, wie RFID (Radio Frequency Identification; zur Authentifizierung) und Kommunikationsstandards, wie OCPP (Open Charge Point Protocol; z.B. zur Abrechnung) können Ladestationen auch im halböffentlichen bzw. öffentlichen Bereich eingesetzt werden. Je nach Ausführung sind Ladestationen mit einem fix verbundenen Kabel oder einer Buchse für den Anschluss eines Ladekabels erhältlich.

Bei der Kommunikation zwischen Ladestation bzw. Ladekabel mit Kontrollbox (ICCB-Kabel) und Elektrofahrzeug werden neben Ladestatus, der Möglichkeit die Ladung zu starten oder zu stoppen und der Vorgabe eines maximalen Ladestroms, keine weiteren Informationen ausgetauscht. Die Soll-Vorgabe des Ladestroms ist normativ auf einen Bereich zwischen 6 A und 80 A beschränkt. Zwischen 0 A und 6 A gibt es keine Regelungsmöglichkeit. Die Ladung ist entweder gestoppt oder wird mit mindestens 6 A vorgegeben.

Um die Ladeleistung des Elektrofahrzeuges zu regeln, kommuniziert die Ladestation eine Vorgabe für den maximalen Ladestrom. Das Elektrofahrzeug empfängt diese Vorgabe von der Ladestation und stellt den tatsächlichen Ladestrom entsprechend ein. Wie schnell und wie exakt die Soll-Vorgabe der Ladestation vom Elektrofahrzeug erfüllt wird, ist abhängig vom Hersteller des jeweiligen Elektrofahrzeuges. Ausregelungszeiten bewegen sich jedoch meist im niedrigen Sekundenbereich und Sollwertleistungsabweichungen im 100 W-Bereich.

Niedrige Ladeleistungen mit verhältnismäßig langen Ladezeiten bieten den Vorteil, dass der Eigenverbrauch von Energie einer regenerativen Energieerzeugungsanlage besser genutzt werden kann und die gesamte Ladeinfrastruktur (Energieversorgungsnetz, Hausversorgungsnetz, Ladestation, Elektrofahrzeug) nicht so stark belastet wird. Die Batterie des Elektrofahrzeuges wird dadurch geschont und deren Lebenszeit verlängert. Energiekosten können in erster Linie durch die Erhöhung des Eigenverbrauchsanteils reduziert werden. Zukünftig werden Netztarife wahrscheinlich auch im Haushaltsbereich leistungsabhängig gestaltet werden. Das hat zur Folge, dass hohe Ladeleistungen zu merklich höheren Stromkosten führen werden.

Die Aufgabe der vorliegenden Erfindung besteht in der Schaffung eines oben genannten Verfahrens und einer oben genannten Vorrichtung zum Laden eines Elektrofahrzeuges, welche eine optimale Ausnutzung der Energie einer Energieerzeugungsanlage und somit eine besonders kostengünstige und wirtschaftliche Ladung des Elektrofahrzeuges erlauben. Das Verfahren und die Vorrichtung sollen möglichst einfach und kostengünstig implementierbar bzw. realisierbar sein und eine einfache Umsetzung zulassen. Die oben beschriebenen Nachteile des Standes der Technik sollen vermieden oder zumindest reduziert werden.

Gelöst wird die erfindungsgemäße Aufgabe in verfahrensmäßiger Hinsicht dadurch, dass die Steuereinrichtung mit der Energiemanagementeinrichtung verbunden wird, und für die Steuereinrichtung zumindest zwei Ladeströme voreingestellt werden, und das Elektrofahrzeug mit einem Ladestrom geladen wird, der in Abhängigkeit der Energiemanagementeinrichtung entsprechend einem der zumindest zwei voreingestellten Ladeströme bereitgestellt wird. Durch das gegenständliche Ladeverfahren wird unter Berücksichtigung der Energieverhältnisse im Hausversorgungsnetz eine wirtschaftlich optimale Ladung des Elektrofahrzeuges erzielt. Das Verfahren zeichnet sich durch besondere Einfachheit aus, da vorhandene Komponenten verwendet werden und keine speziellen Kommunikationsvorrichtungen zwischen den Komponenten notwendig sind, welche die Kosten erhöhen und die Zuverlässigkeit reduzieren könnten. Mit geringem Aufwand wird über die voreingestellten Ladeströme die Energieversorgung für das Elektrofahrzeug in abgestufter Weise erhöht bzw. erniedrigt. Das ermöglicht eine genauere Regelung des Ladestroms als mit einfachem Zu- und Wegschalten des Ladestroms und erfordert weniger technischen Aufwand als eine stufenlos regelnde Ladestation. Anstelle von voreingestellten Ladeströmen könnten in äquivalenter Weise auch Ladeleistungen voreingestellt werden und die Ladung des Elektrofahrzeuges anhand dieser zumindest zwei verschiedenen voreingestellten Ladeleistungen in Abhängigkeit des Energiemanagements des Hausversorgungsnetzes vorgenommen werden. Das Funktionsprinzip dieser Stufensteuerung des Ladestroms bzw. der Ladeleistung lässt sich in vorteilhafter Weise auf 1-, 2-, und 3-phasigen Anschluss der Ladevorrichtung anwenden. Die Stufensteuerung für die Energieversorgung lässt sich für Wechselstrom, Gleichstrom, bzw. kabelgebundene und induktive Energieübertragung anwenden. Von der Steuereinrichtung der Ladevorrichtung kann zur Ladung des Elektrofahrzeuges immer nur ein voreingestellter Ladestrom herangezogen werden oder auch aus zwei oder mehr voreingestellten Ladeströmen eine Summe oder eine Differenz oder eine Kombination aus Summe und Differenz gebildet und dem Elektrofahrzeug vorgegeben werden. Neben solchen kumulierbaren voreingestellten Ladeströmen gibt es noch weitere Möglichkeiten, wie schlussendlich eine Abstufung der voreingestellten Ladeströme erzielt werden kann. Im Prinzip geht es bei dieser Erfindung immer um eine Abstufung des Bereichs zwischen minimalem und maximalem Ladestrom einer Ladevorrichtung in Abhängigkeit des Energiemanagements des Hausversorgungsnetzes. Der Vorteil der Abstufung ergibt sich daraus, dass sich ein Datenaustausch zwischen der Ladevorrichtung und dem Energiemanagement erübrigt, da der Steuereinrichtung der Ladevorrichtung die konkreten Werte bereits bekannt sind und somit einfache Steuersignale ausreichen, um die Ladevorrichtung zu steuern. Da nur voreingestellte Ladeströme in der Ladevorrichtung durch die Energiemanagementeinrichtung aktivierbar sind, können keine unzulässig hohen Ladeströme auftreten. In gleicher Weise können von einer Ladevorrichtung auch negative Ladeströme vorgegeben und voreingestellt werden, um Energie aus dem Elektrofahrzeug einem anderen Verbraucher zur Verfügung zu stellen, oder in das Hausversorgungsnetz oder Energieversorgungsnetz einzuspeisen. Letzteres ist unter dem Namen "vehicle to grid" bekannt. Als kleinster voreingestellter Ladestrom wird beispielsweise der Mindestladestrom des Elektrofahrzeuges, als größter voreingestellter Ladestrom der technisch maximale Ladestrom eingestellt. Der Wertebereich zwischen kleinstem und größtem voreingestellten Ladestrom kann in abgestufter Form weiter aufgelöst werden. In einer minimalen Variante könnte die Ladung des Elektrofahrzeugs nur mit zwei voreingestellten Ladeströmen durchgeführt werden. In der Praxis wird mit mehr als 20 Stufen eine wesentliche Steigerung der Wirtschaftlichkeit nicht mehr zu erwarten sein und werden beispielsweise bereits mit drei Stufen zufriedenstellende Ergebnisse erzielt. Ein voreingestellter minimaler Ladestrom von 0 Ampere für das Deaktivieren der Bereitstellung von Energie ist nicht nötig aber denkbar.

Gemäß einer bevorzugten Ausführungsvariante des Ladeverfahrens wird für jeden der zumindest zwei voreingestellten Ladeströme jeweils ein Einschaltschwellwert und ein Ausschaltschwellwert festgelegt, und der Ladestrom zum Laden des Elektrofahrzeuges aus den zumindest zwei voreingestellten Ladeströmen ausgewählt, indem die überschüssige Energie des Hausversorgungsnetzes sowie die aus dem Energieversorgungsnetz bezogene Energie ermittelt und mit zumindest je einem Einschaltschwellwert und bzw. oder Ausschaltschwellwert verglichen wird, und bei Erreichen der entsprechenden Einschaltschwellwerte oder Ausschaltschwellwerte der entsprechende voreingestellte Ladestrom aktiviert oder deaktiviert wird. Bei den Einschalt- und Ausschaltschwellwerten handelt es sich insbesondere um Leistungs- oder Stromwerte. Die festgelegten Ein- und Ausschaltschwellwerte werden mit den in der Energiemanagementeinrichtung ermittelten Energie- oder Stromwerten verglichen und das Ergebnis des Vergleichs als Basis für die Entscheidung, welcher voreingestellte Ladestrom für das Laden des Elektrofahrzeuges bereitgestellt wird, herangezogen.

Dabei kann die ermittelte überschüssige Energie des Hausversorgungsnetzes mit den Einschaltschwellwerten und die ermittelte aus dem Energieversorgungsnetz bezogene Energie mit den Ausschaltschwellwerten verglichen werden, und der entsprechende voreingestellte Ladestrom aktiviert oder deaktiviert werden. Für eine stabile Steuerung wird als Wert für die ermittelte Energie oder Leistung vorzugsweise ein Mittelwert über eine bestimmte Zeitspanne, beispielsweise 5 Minuten herangezogen.

Alternativ dazu kann auch die ermittelte in das Energieversorgungsnetz eingespeiste Energie mit den Einschaltschwellwerten und mit den Ausschaltschwellwerten verglichen werden, und der entsprechende voreingestellte Ladestrom aktiviert oder deaktiviert werden, oder die ermittelte aus dem Energieversorgungsnetz bezogene Energie mit den Einschaltschwellwerten und mit den Ausschaltschwellwerten verglichen und der entsprechende voreingestellte Ladestrom aktiviert oder deaktiviert werden. Diese Variante eignet sich besonders dazu, einen Netzbezug für das Laden sicher auszuschließen. Darüber hinaus eignet sich die Variante für einen generell erlaubten Netzbezug, wenn dieser nur in seiner Höhe begrenzt werden soll, um Leistungsspitzen, für die der Betreiber eines Energieversorgungsnetzes höhere Tarife berechnen kann, sicher zu begrenzen. Für den Fall, dass ein Netzbezug für jede Phase extra in Rechnung gestellt wird, kann das Energiemanagement auf die Minimierung des Netzbezuges je Phase angewiesen werden.

Vorzugsweise wird das Laden des Elektrofahrzeuges gestoppt, wenn die ermittelte vom Energieversorgungsnetz bezogene Energie den Ausschaltschwellwert des kleinsten voreingestellten Ladestroms überschreitet.

Die Aktivierung eines voreingestellten Ladestroms kann über eine wählbare Mindestzeit, die beispielsweise einige Minuten betragen kann, beibehalten werden. Durch diese Maßnahme wird ein häufiges Umschalten in den Stufen des Ladestroms zwischen den einzelnen voreingestellten Ladeströmen verhindert, was beim Laden einer Batterie eines Elektrofahrzeuges nachteilig sein würde und die Lebensdauer der Batterie verringern könnte. Eine übliche Mindestzeit kann im Bereich von einigen Minuten, beispielsweise 15 Minuten, liegen.

Wenn gemäß einer weiteren Variante des erfindungsgemäßen Verfahrens ein Zeitfenster eingestellt wird, und der Ladestrom zum Laden des Elektrofahrzeuges unter Berücksichtigung des eingestellten Zeitfensters entsprechend einem der zumindest zwei voreingestellten Ladeströme bereitgestellt wird, kann der Ladevorgang noch weiter optimiert und eine besonders kostengünstige Ladung des Elektrofahrzeuges vorgenommen werden. Über die Definition eines solchen Zeitfensters kann beispielsweise auch eine Sicherheitsladung eingestellt werden, um eine ausreichende Ladung des Elektrofahrzeuges auch bei ungenügender Energieerzeugung (beispielsweise bei Schlechtwettertagen im Falle einer Photovoltaikanlage als Energieerzeugungsanlage) sicherzustellen. Durch das Vorsehen von Zeitfenstern kann beispielsweise auch ein späterer Ladestart, eine Ladung zur Sicherstellung einer bestimmten Reichweite des Elektrofahrzeuges oder auch eine Ladung des Elektrofahrzeuges speziell bei günstigen Stromtarifzeiten festgelegt werden.

Weiters kann vorgesehen sein, dass auf einen Betriebsmodus zum Laden des Elektrofahrzeuges mit einem fix vorgegebenen Ladestrom und bzw. oder auf einen Betriebsmodus zum Deaktivieren der Bereitstellung von Energie umgeschaltet wird. Ein Anwender des erfindungsgemäßen Ladeverfahrens hat somit die Möglichkeit, beispielsweise ein Schnellladeverfahren mit einem möglichst hohen Ladestrom unabhängig von wirtschaftlichen Aspekten, vorzunehmen oder das Ladeverfahren auch komplett zu deaktivieren. Beispielsweise kann zwischen drei Betriebsmodi umgeschaltet werden, nämlich
1. der erfindungsgemäßen wirtschaftlichen Ladung unter Berücksichtigung des Energiemanagements (Energiemanagement-Steuerung),
2. der Ladung mit einem fix voreingestellten Ladestrom ohne Berücksichtigung wirtschaftlicher Aspekte (unmittelbares Laden), und schließlich
3. einem Ladestopp.

Die Umschaltung zwischen verschiedenen Betriebsmodi kann beispielsweise in besonders einfacher Weise mit einem Schlüsselschalter und somit ohne die Nutzung eines Computers oder Smartphones vorgenommen werden.

Die Steuerung des Ladestroms zum Laden des Elektrofahrzeuges kann auch ferngesteuert erfolgen. Durch Verwendung einer Fernsteuerung (kabelgebunden oder drahtlos) oder einer App auf einem Smartphone können die Einstellungen vom Benutzer noch bequemer und von beliebigen Orten aus vorgenommen werden.

Gelöst wird die erfindungsgemäße Aufgabe auch durch eine oben erwähnte Vorrichtung zum Laden eines Elektrofahrzeuges bzw. einer Ladestation, wobei die Steuereinrichtung zur Verbindung mit der Energiemanagementeinrichtung ausgebildet ist, und zumindest zwei Ladeströme voreinstellbar sind, sodass der Ladestrom zum Laden des Elektrofahrzeuges in Abhängigkeit der Energiemanagementeinrichtung entsprechend einem der zumindest zwei voreingestellten Ladeströme bereitgestellt ist. Wie bereits oben im Zusammenhang mit dem Ladeverfahren erwähnt, kann durch die Einbeziehung eines im Hausversorgungsnetz vorhandenen Energiemanagements eine wirtschaftlich optimale Ladung des Elektrofahrzeuges mit möglichst niedrigen Energiekosten erzielt werden. Die Ladevorrichtung kann bei vielen verschiedenen Systemen angewendet werden, insbesondere auch bei älteren Energieerzeugungsanlagen, beispielsweise Photovoltaikanlagen oder Windenergieanlagen. Dabei kann durch die Einbeziehung von im Hausversorgungsnetz vorhandenen Energiemanagementeinrichtungen in den Ladevorgang eine optimale Ausnutzung der Energieressourcen erfolgen. Energiemanagementeinrichtungen können beispielsweise Wechselrichter vorhandener Photovoltaikanlagen, Stromzähler im Hausversorgungsnetz oder Smart Meter sein, welche die entsprechenden Informationen über die aktuell erzeugte Energie, verbrauchte Energie und allenfalls ins Energieversorgungsnetz eingespeiste Energie sowie den Ladezustand eines allenfalls zusätzlich vorhandenen Energiespeichers verfügen. Durch entsprechende Anpassung von Einstellungen in der Ladevorrichtung und allenfalls dem Energiemanagement kann rasch eine Anpassung an Veränderungen im Hausversorgungsnetz (beispielsweise Erhöhung der installierten Leistung einer Energieerzeugungsanlage, geänderte Bedingungen eines Energieversorgungsnetzes, etc.) erfolgen.

Gemäß einem Merkmal der Ladevorrichtung ist für jeden der zumindest zwei voreingestellten Ladeströme jeweils ein Einschaltschwellwert und ein Ausschaltschwellwert festlegbar, und ist zumindest eine Einrichtung zur Ermittlung der überschüssigen Energie des Hausversorgungsnetzes und der vom Energieversorgungsnetz bezogenen Energie und zum Vergleich mit zumindest einem Einschaltschwellwert und bzw. oder Ausschaltschwellwert vorgesehen, und die Steuereinrichtung dazu ausgebildet, dass der Ladestrom zum Laden des Elektrofahrzeuges entsprechend den zumindest zwei voreingestellten Ladeströmen bereitgestellt wird, indem bei Erreichen der entsprechenden Einschaltschwellwerte oder Ausschaltschwellwerte der entsprechende voreingestellte Ladestrom aktiviert oder deaktiviert wird.

Vorzugsweise ist eine Umschalteinrichtung zum Umschalten auf einen Betriebsmodus zum Laden des Elektrofahrzeuges mit einem fix vorgegebenen Ladestrom und bzw. oder auf einen Betriebsmodus zum Deaktivieren der Bereitstellung von Energie vorgesehen. Wie bereits oben erwähnt, kann dadurch eine Umschaltung der Ladestation auf verschiedene Betriebsmodi vorgenommen werden. Wie bereits oben im Zusammenhang mit dem Verfahren erwähnt, kann somit zusammen mit der erfindungsgemäßen wirtschaftlichen Ladung beispielsweise zwischen insgesamt drei verschiedene Betriebsmodi umgeschaltet werden.

Die Steuereinrichtung der Ladevorrichtung kann zur Verbindung mit einem die Energiemanagementeinrichtung bildenden Wechselrichter einer Photovoltaikanlage ausgebildet sein. Dabei wird also die Information über die erzeugte und eingespeiste Energie einer Photovoltaikanlage von einem vorhandenen Wechselrichter als Energiemanagementeinrichtung bereitgestellt.

Alternativ dazu kann auch ein Stromzähler oder ein Smart Meter des Hausversorgungsnetzes die für die wirtschaftliche Ladung des Elektrofahrzeuges notwendige Information als Energiemanagementeinrichtung zur Verfügung stellen.

Wenn eine Einrichtung zum Auswählen eines Zeitfensters vorgesehen ist, sodass der Ladestrom zum Laden des Elektrofahrzeuges unter Berücksichtigung des ausgewählten Zeitfensters bereitgestellt ist, kann eine noch optimalere Ladung des Elektrofahrzeuges während des zur Verfügung stehenden Zeitfensters erfolgen.

Die Erfindung wird anhand der beigefügten Figuren näher erläutert. Darin zeigen:
- Fig. 1: ein Blockschaltbild einer Vorrichtung zum Laden eines Elektrofahrzeuges in einem Hausversorgungsnetz in allgemeiner Form;
- Fig. 2: ein Blockschaltbild einer ersten Ausbildung einer Vorrichtung zum Laden eines Elektrofahrzeuges in einem Hausversorgungsnetz;
- Fig. 3: ein Blockschaltbild einer zweiten Ausbildung einer Vorrichtung zum Laden eines Elektrofahrzeuges in einem Hausversorgungsnetz;
- Fig. 4: ein Blockschaltbild einer dritten Ausbildung einer Vorrichtung zum Laden eines Elektrofahrzeuges in einem Hausversorgungsnetz;
- Fig. 5: ein Blockschaltbild einer Ladevorrichtung mit drei voreinstellbaren Ladeströmen;
- Fig. 6: ein Diagramm zur Veranschaulichung eines Ausführungsbeispiels des erfindungsgemäßen Ladeverfahrens mit drei voreingestellten Ladeströmen; und
- Fig. 7: den zeitlichen Verlauf der Leistung am Anschlusspunkt zwischen Hausversorgungsnetz und einem Energieversorgungsnetz unter Anwendung des erfindungsgemäßen Ladeverfahrens.

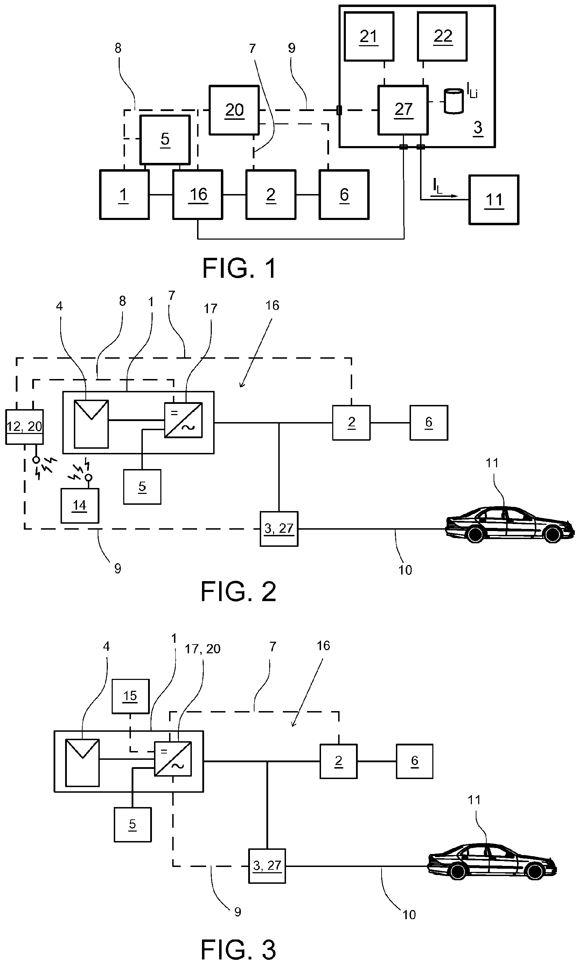

In Fig. 1 ist ein Blockschaltbild einer ersten Ausbildung einer Ladevorrichtung 3 zum Laden eines Elektrofahrzeuges 11 in einem Hausversorgungsnetz 16 in allgemeiner Form dargestellt. Ein öffentliches Energieversorgungsnetz 6 wird von entsprechenden Elektrizitätskraftwerken von Energieversorgungsunternehmen mit elektrischer Energie gespeist. Über einem Anschlusspunkt des Energieversorgungsnetzes 6 kann das Hausversorgungsnetz 16 angeschlossen werden. Im Hausversorgungsnetz 16 können eigene Energieerzeugungsanlagen 1, beispielsweise eine Photovoltaikanlage, angeschlossen werden. Optional kann ein Energiespeicher 5 vorgesehen sein.

Üblicherweise wird das Energiemanagement des Hausversorgungsnetzes 16 und bzw. oder Energieversorgungsnetzes 6 über eine hier allgemein als Energiemanagementeinrichtung 20 bezeichnete Komponente betrieben. Bei der Energiemanagementeinrichtung 20 kann es sich um einen zwischen Hausversorgungsnetz 16 und Energieversorgungsnetz 6 angeordneten vorhandenen Stromzähler 2 oder einen Smart Meter, sowie einen Wechselrichter einer Photovoltaikanlage als Energieerzeugungsanlage 1, oder auch ein anderes Modul handeln.

Mit dem Hausversorgungsnetz 16 verbunden ist die Ladevorrichtung 3 zum Laden der Batterie des Elektrofahrzeuges 11. Zu diesem Zweck wird der Ausgang der Ladevorrichtung 3 mit einem entsprechenden Ladekabel 10 mit dem Elektrofahrzeug 11 verbunden. Über eine Steuereinrichtung 27 wird der Ladevorgang entsprechend gesteuert. Erfindungsgemäß ist die Steuereinrichtung 27 der Ladevorrichtung 3 mit der Energiemanagementeinrichtung 20 verbunden, sodass die Ladung des Elektrofahrzeuges 11 unter Berücksichtigung der Energieverhältnisse im Hausversorgungsnetz 16 stattfinden kann.

Der Ladestrom l_{L} zum Laden des Elektrofahrzeuges 11 wird aus zumindest zwei voreingestellten Ladeströmen l_{Li} in Abhängigkeit der Energiemanagementeinrichtung 20 bereitgestellt. Die Ladeströme l_{Li} werden über entsprechende Einstellvorrichtungen 21, 22 voreingestellt. Die Ladung des Elektrofahrzeuges 11 erfolgt in wirtschaftlich optimaler Weise in abgestufter Weise mit verschieden hohen Vorgabewerten für die Stromstärken des Ladestroms. Diese voreingestellten Ladeströme l_{Li} werden beispielsweise im Rahmen der Installation der Ladevorrichtung 1 von einem Fachmann festgelegt. Die voreingestellten Ladeströme l_{Li} können rasch an das vorhandene Hausversorgungsnetz 16 und das Elektrofahrzeug 11 angepasst und entsprechend eingestellt werden. In Abhängigkeit der Energiesituation im Hausversorgungsnetz 16 bzw. in Abhängigkeit der Information der Energiemanagementeinrichtung 20 wird einer der voreingestellten Ladeströme l_{Li} von der Steuereinrichtung 27 der Ladevorrichtung 3 bereitgestellt und zum Laden des Elektrofahrzeuges 11 verwendet. Die Steuereinrichtung 27 der Ladevorrichtung 3 übermittelt dem über das Ladekabel 10 angeschlossenen Elektrofahrzeug 11 mittels standardisierter Kommunikation den entsprechend der Energiemanagementeinrichtung 20 ausgewählten voreingestellten Ladestrom l_{Li}. Das Elektrofahrzeug 11 wertet den von der Steuereinrichtung 27 kommunizierten Ladestrom l_{Li} als die maximal vom Elektrofahrzeug 11 zu beziehende Ladestromstärke. In der Regel überschreitet ein Elektrofahrzeug 11 die kommunizierte maximale Ladestromstärke einer Ladevorrichtung 3 nicht.

Bei der Ausführungsvariante gemäß Fig. 2 ist die Energiemanagementeinrichtung 20 durch eine Energiemanagement-Box 12 gebildet. Das Hausversorgungsnetz 16 beinhaltet die Energiemanagement-Box 12, welche mit einem Stromzähler 2 und einem Wechselrichter 17 einer Energieerzeugungsanlage 1 über Datenverbindungen 7, 8 verbunden ist. Die Energiemanagementeinrichtung 20 bzw. Energiemanagement-Box 12 steuert die Steuereinrichtung 27 der Ladevorrichtung 3 zum Laden des Elektrofahrzeuges 11 entsprechend an. Basierend auf einem vom Stromzähler 2 gemessenen Stromwert steuert die Energiemanagement-Box 12 die vorgegebenen Ladeströme l_{Li}. Über das Ladekabel 10 kommuniziert die Ladevorrichtung 3 dem Elektrofahrzeug 11 den durch die Energiemanagementeinrichtung 20 bestimmten voreingestellten Ladestrom l_{Li} als die Stromstärke, die das Elektrofahrzeug 11 maximal beziehen darf. Basierend auf dem vom Stromzähler 2 gemessenen Stromwert gibt die Energiemanagement-Box 12 dem Wechselrichter 17 bekannt, ob Energie in einen allfälligen Energiespeicher 5 geladen werden soll, oder ob Energie aus dem Energiespeicher 5 in das Energieversorgungsnetz 6 bereitgestellt werden soll oder ob von den Photovoltaikmodulen 4 erzeugte Energie in das Energieversorgungsnetz 6 gespeist werden soll. Für eine Fernsteuerung der Ladevorrichtung 3 kann optional auch eine drahtlose Fernsteuerung 14 vorgesehen sein. Die drahtlose Steuerung erfolgt über die Energiemanagement-Box 12 als Energiemanagementeinrichtung 20.

Bei der Variante gemäß Fig. 3 wird die Energiemanagementeinrichtung 20 vom Wechselrichter 17 einer Photovoltaikanlage als Energieerzeugungsanlage 1 betrieben. Die Ladevorrichtung 3 wird vom Wechselrichter 17 der Energieerzeugungsanlage 1 über ein mehrpoliges Steuerkabel 9 angesteuert. Über ein Ladekabel 10 kommuniziert die Ladevorrichtung 3 einem Elektrofahrzeug 11 den durch das Energiemanagement bestimmten voreingestellten Ladestrom l_{Li} als den Ladestrom, den das Elektrofahrzeug 11 maximal beziehen darf. Der Wechselrichter 17 kann mit einem Stromzähler 2 über eine Datenverbindung 7 verbunden sein. Basierend auf dem vom Stromzähler 2 gemessenen Stromwert entscheidet der Wechselrichter 17 als Energiemanagementeinrichtung 20, ob die Energieerzeugungsanlage 1 einen allfälligen Energiespeicher 5 laden soll, oder ob dieser Energie aus dem Energiespeicher 5 in das Energieversorgungsnetz 6 bereitstellen soll oder ob von den Photovoltaikmodulen 4 erzeugte Energie in das Energieversorgungsnetz 6 gespeist werden soll. Für eine Fernsteuerung der Ladevorrichtung 3 ist optional eine kabelgebundene Fernsteuerung 15 vorgesehen.

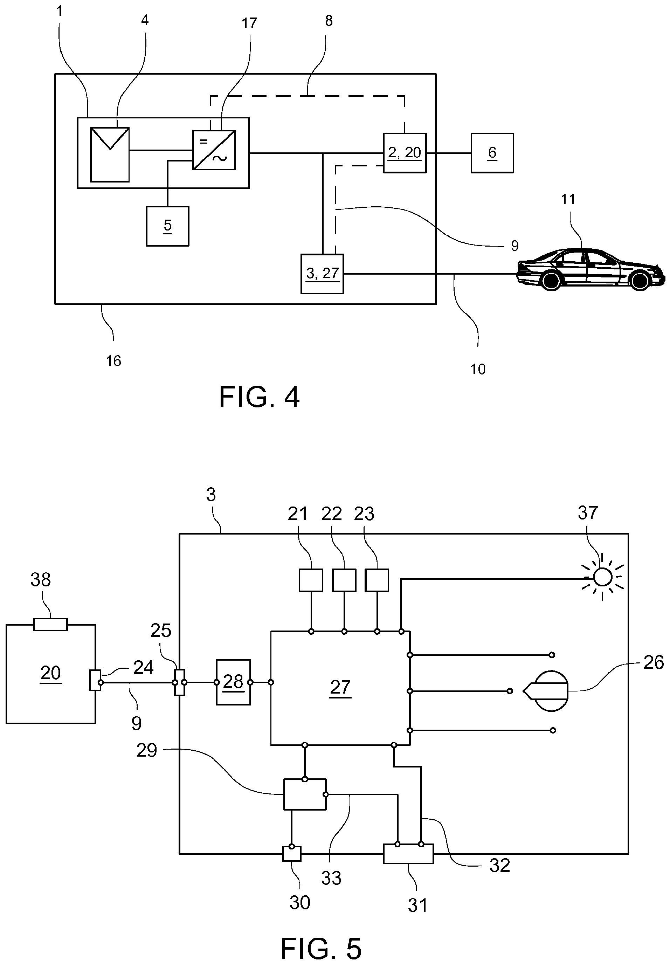

Bei der Variante gemäß Fig. 4 wird die Energiemanagementeinrichtung durch einen Stromzähler 2 gebildet. Die Ladevorrichtung 3 wird vom Stromzähler 2 über ein mehrpoliges Steuerkabel 9 angesteuert. Über ein Ladekabel 10 kommuniziert die Ladevorrichtung 3 einem Elektrofahrzeug 11 den durch das Energiemanagement bestimmten voreingestellten Ladestrom l_{Li} als den Ladestrom, den das Elektrofahrzeug 11 maximal beziehen darf. Der Wechselrichter 17 ist mit dem Stromzähler 2 über eine Datenverbindung 8 verbunden. Basierend auf dem vom Stromzähler 2 gemessenen Stromwert entscheidet der Stromzähler 2 als Energiemanagementeinrichtung 20, ob die Energieerzeugungsanlage 1 einen allfälligen Energiespeicher 5 laden soll, oder ob dieser Energie aus dem Energiespeicher 5 in das Energieversorgungsnetz 6 bereitstellen soll oder ob von den Photovoltaikmodulen 4 erzeugte Energie in das Energieversorgungsnetz 6 gespeist werden soll.

Fig. 5 zeigt ein Blockschaltbild einer Ladevorrichtung 3 mit beispielsweise drei Einstellvorrichtungen 21 bis 23 für drei voreinstellbare Ladeströme l_{Li}. Es sind auch nur zwei oder mehr als drei Einstellvorrichtungen 21 bis 23 für die Einstellung der Ladeströme l_{L1} möglich. Für erhöhte Benutzerfreundlichkeit kann an den Einstellvorrichtungen 21 bis 23 für die Voreinstellung der Ladeströme l_{L1} eine zweite Skalierung vorgesehen sein, an der man entsprechend dem eingestellten Strom die resultierende Leistung ablesen kann. Man kann somit die Einstellung auch nach der Leistung vornehmen und anschließend den entsprechenden Stromwert ablesen, ohne dass eine Umrechnung notwendig ist.

Wie oben in den Fig. 1 bis 4 beschrieben, wird die Ladevorrichtung 3 bzw. deren Steuereinrichtung 27 von einer Energiemanagementeinrichtung 20 angesteuert. Ein Steuerkabel 9 verbindet die Ausgänge 24 der Energiemanagementeinrichtung 20 mit den Eingängen 25 der Ladevorrichtung 3. Die steuerbaren Ausgänge 24 der Energiemanagementeinrichtung 20 können z.B. die digitalen Ausgänge eines Wechselrichters 17 einer Photovoltaikanlage oder Windkraftanlage sein. Die Energiemanagementeinrichtung 20 kann auch entsprechende Eingänge 38 aufweisen. Über eine optionale Schnittstelle 28 werden die Steuersignale von den Eingängen 25 der Ladevorrichtung 3 zur Steuereinrichtung 27 übertragen. Die Schnittstelle 28 erfüllt den Zweck, eine Kompatibilität zwischen den vielfältigen möglichen Ausgängen 24 einer Energiemanagementeinrichtung 20 und der Steuereinrichtung 27 der Ladevorrichtung 3 herzustellen. Über die Einstellvorrichtungen 21 bis 23 werden erstmals bei der Installation der Ladevorrichtung 3 die entsprechenden Ladeströme l_{Li}, hier drei Ladeströme l_{L1}, l_{L2} und l_{L3} voreingestellt und von der Steuereinrichtung 27 ausgelesen.

Mit der Steuereinrichtung 27 kann eine optionale Umschalteinrichtung 26 für die Auswahl verschiedener Betriebsmodi verbunden sein. Der gewählte Betriebsmodus wird von der Steuereinrichtung 27 erfasst. Die Umschalteinrichtung 26, beispielsweise ein Touch-Panel, ein Schlüsselschalter, versperrbarer Drehschalter, etc. ermöglicht beispielsweise eine Umschaltung zwischen drei Betriebsmodi:
1. Energiemanagement-Steuerung
2. Unmittelbares Laden
3. Ladestopp

Zur Umsetzung des erfindungsgemäßen wirtschaftlichen Ladens wird die Umschalteinrichtung 26 auf den ersten Betriebsmodus "Energiemanagement-Steuerung" gestellt. Für diesen Betriebsmodus ist es möglich, an der Ladevorrichtung 3 eine Abstufung aus mehreren Ladeströmen l_{L1}, beispielsweise zwischen 6 A und 32 A einzustellen. Für schnellstmögliches Laden des Elektrofahrzeuges 11 ohne Rücksicht auf die aktuelle Energieerzeugung der Energieerzeugungsanlage 1 wird die Ladevorrichtung 3 bei Bedarf mit der Umschalteinrichtung 26 auf den zweiten Betriebsmodus "Unmittelbares Laden" umgeschaltet. Eine Berücksichtigung der Information der Energiemanagementeinrichtung 20 wird hier ignoriert und die Ladung mit dem größten Ladestrom an das Elektrofahrzeug 11 kommuniziert. Der dritte Betriebsmodus "Ladestopp" eignet sich unter anderem für das Absperren der Ladevorrichtung 3. Dabei wird das Bereitstellen von Energie für das Elektrofahrzeug 11 in der Ladevorrichtung 3 deaktiviert. Das ist besonders bei einer Ladevorrichtungen 3 von Vorteil, die im für Dritte frei zugänglichen Bereich montiert ist. Bei einem Schlüsselschalter als Umschalteinrichtung 26 kann sicherheitshalber der Schlüssel vorzugsweise in jeder Position abgezogen werden. Im Fall eines Touch-Panels als Umschalteinrichtung 26 kann zum Schutz vor unberechtigter Inbetriebnahme beispielsweise die Abfrage eines Codes vorgesehen werden.

Die Steuereinrichtung 27 wertet die Steuersignale, die voreingestellten Ladeströme l_{L1}, l_{L2} und l_{L3} und die Auswahl des Betriebsmodus an der Umschalteinrichtung 26 aus und kommuniziert einen entsprechenden Ladestrom l_{L} über eine Kommunikationsleitung 32, den Ladeanschluss 31 und ein Ladekabel 10 (siehe Fig. 1 bis 4) an das Elektrofahrzeug 11 (siehe Fig. 1 bis 4). Weiters kann die Steuereinrichtung 27 einen Schalter 29 und eine Statusleuchte 37 entsprechend ansteuern. Verschiedene Farben und Leuchtintervalle der Statusleuchte 37 ermöglichen Rückschlüsse auf den aktuellen Status der Ladevorrichtung 3 (z.B. "Bereitschaft", "Verbindungsaufbau",...). Der Schalter 29 aktiviert oder deaktiviert die Stromversorgung bzw. den Stromfluss über die Stromleitungen 33 für den Ladeanschluss 31. Die Ladevorrichtung 3 wird über den Anschluss 30 an das Hausversorgungsnetz 16 (siehe Fig. 1 bis 4) angeschlossen.

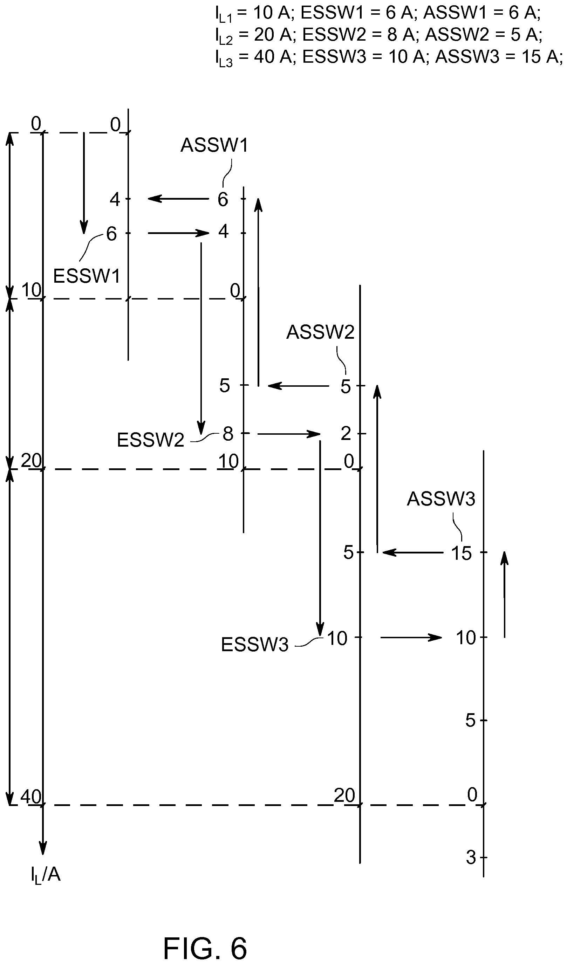

Fig. 6 zeigt ein Diagramm zur Veranschaulichung eines Ausführungsbeispiels des erfindungsgemäßen Ladeverfahrens mit drei voreingestellten Ladeströmen l_{Li} in einem an ein Energieversorgungsnetz 6 angeschlossenen Hausversorgungsnetz 16. Die voreingestellten Ladeströme l_{L1}, l_{L2} und l_{L3} werden auf der vertikalen Stromachse l_{L} / A veranschaulicht.

An den vertikalen "Einspeiseachsen" parallel zur Stromachse l_{L} / A wird der eingespeiste oder bezogene Strom (Energie bzw. Leistung) veranschaulicht. Geht man von einem bei 0 A beginnenden kontinuierlichen Anstieg der Stromeinspeisung und deaktivierter Bereitstellung von Energie der Ladevorrichtung aus, steigt man am Nullpunkt der ersten Einspeiseachse ein und bewegt sich mit steigender Einspeisung nach unten, bis der erste Einschaltschwellwert ESSW1 (= 6 A) erreicht bzw. überschritten wird (folgend ist vereinfacht nur von Überschreitung die Rede). Nach dem Überschreiten des ersten Einschaltschwellwerts ESSW1 wird der erste voreingestellte Ladestrom l_{L1} = 10 A aktiviert. Der Einfachheit halber wird im Folgenden davon ausgegangen, dass ein an die Ladevorrichtung 1 angeschlossenes Elektrofahrzeug 11 immer den an das Elektrofahrzeug 11 als maximal erlaubten, von der Ladevorrichtung 1 kommunizierten, Ladestrom bezieht und nicht weniger. Durch den nun vom Elektrofahrzeug 11 bezogenen ersten voreingestellten Ladestrom l_{L1} = 10 A ändert sich in diesem Punkt die Einspeisung von 6 A in einen Bezug von Strom von 4 A, was durch die Verschiebung der Einspeiseachse um 10 A in der nächsten vertikalen Linie (zweite Einspeiseachse) veranschaulicht wird. Der Nullpunkt der zweiten Einspeiseachse korrespondiert nun mit 10 A der Achse l_{L} / A.

Steigt die erzeugte Energie bzw. der erzeugte Strom der Energieerzeugungsanlage 1 weiter an, bis es zu einer Überschreitung des zweiten Einschaltschwellwerts ESSW2 (= 8 A) kommt, wird der zweite voreingestellte Ladestrom l_{L2} = 20 A aktiviert und der erste voreingestellte Ladestrom l_{L1} deaktiviert. Durch den nun vom Elektrofahrzeug 11 bezogenen Ladestrom von 20 A ändert sich in diesem Punkt die Stromeinspeisung von 8 A in einen Strombezug von 2 A, was durch eine Verschiebung der Einspeiseachse um weitere 10 A in der nächsten vertikalen Linie (dritte Einspeiseachse) veranschaulicht wird. Der Nullpunkt der dritten Einspeiseachse korrespondiert nun mit 20 A der Achse l_{L} / A.

Steigt die erzeugte Energie bzw. der erzeugte Strom der Energieerzeugungsanlage 1 weiter an, bis es zu einer Überschreitung des dritten Einschaltschwellwerts ESSW3 (= 10 A) kommt, wird der dritte voreingestellte Ladestrom l_{L3} = 40 A aktiviert. Durch den nun vom Elektrofahrzeug 11 bezogenen Ladestrom von 40 A ändert sich in diesem Punkt die Stromeinspeisung von 10 A in einen Strombezug von 10 A, was durch eine weitere Verschiebung der Einspeiseachse veranschaulicht wurde (vierte Einspeiseachse). Der Nullpunkt der vierten Einspeiseachse korrespondiert nun mit 40 A der Achse l_{L} / A.

Ab diesem Punkt wird zur weiteren Erklärung von einer kontinuierlich abnehmenden Energieerzeugung der Energieerzeugungsanlage 1 ausgegangen, was durch die Pfeile nach oben in den vertikalen Linien veranschaulicht wird.

Kommt es zu einer Überschreitung des dritten Ausschaltschwellwerts ASSW3 (= 15 A), wird der dritte voreingestellte Ladestrom l_{L3} = 40 A deaktiviert und der zweite voreingestellte Ladestrom l_{L2} = 20 A aktiviert. Durch den nun vom Elektrofahrzeug 11 bezogenen Ladestrom von 20 A ändert sich in diesem Punkt der Strombezug von 15 A in eine Stromeinspeisung von 5 A und wir springen nun nach links zur dritten vertikalen Einspeiseachse zurück.

Bei weiter abnehmender Energie- bzw. Stromerzeugung kommt es zu einer Überschreitung des zweiten Ausschaltschwellwerts ASSW2 (= 5 A) und der zweite voreingestellte Ladestrom l_{L2} = 20 A wird deaktiviert und der erste voreingestellte Ladestrom l_{L1} = 10 A aktiviert. Durch den nun vom Elektrofahrzeug 11 bezogenen Ladestrom von 10 A ändert sich in diesem Punkt der Strombezug von 5 A in eine Stromeinspeisung von 5 A und wir gehen auf die zweite Einspeiseachse über.

Bei weiter abnehmender Energie- bzw. Stromerzeugung kommt es zu einer Überschreitung des ersten Ausschalschwellwerts ASSW1 (= 6 A) und der erste voreingestellte Ladestrom l_{L1} = 10 A wird deaktiviert und keine anderer voreingestellter Ladestrom aktiviert. Dadurch, dass das Elektrofahrzeug 11 nunmehr keinen Ladestrom mehr bezieht, ändert sich der Strombezug von 6 A in eine Stromeinspeisung von 4 A und es ist die erste Einspeiseachse relevant.

Anhand dieses Beispiels einer Ladesteuerung mit drei voreinstellbaren Ladeströmen l_{Li} lässt sich erkennen, dass das Energiemanagement darauf abzielt, Energie aus eigener Erzeugung möglichst selbst zu verbrauchen (Eigenverbrauch) und den Bezug von Energie aus dem Energieversorgungsnetz 6 (Netzbezug) innerhalb sinnvoller Grenzen zu vermeiden.

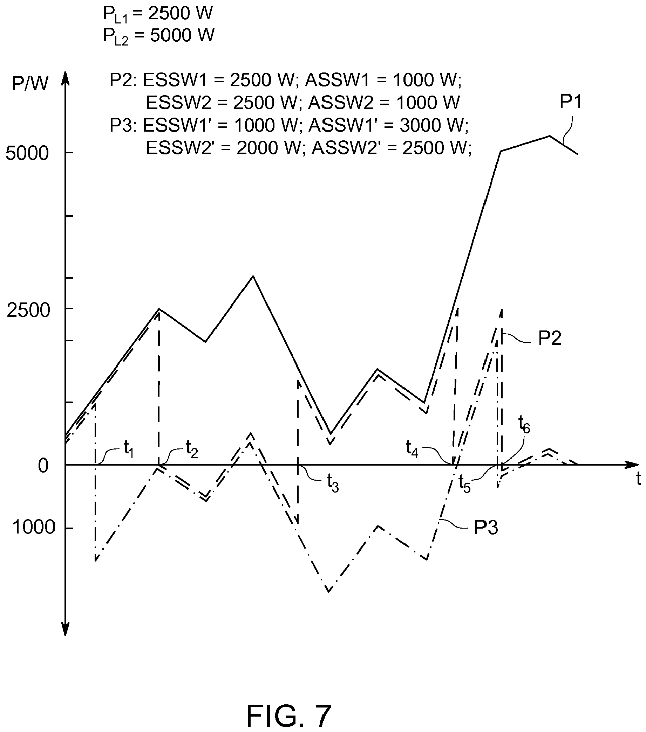

Fig. 7 zeigt ein Beispiel eines erfindungsgemäßen Energiemanagements anhand des zeitlichen Verlaufs der Leistung P am Anschlusspunkt zwischen Hausversorgungsnetz 16 und Energieversorgungsnetz 6 in Abhängigkeit der Zeit t für einen beispielhaften Zeitabschnitt. Das Diagramm beinhaltet drei verschiedene Leistungsverläufe P1, P2 und P3. Eine Leistung P oberhalb der Zeitachse t entspricht einer Einspeisung von Energie in das Energieversorgungsnetz 6, wohingegen eine Leistung P unterhalb der Zeitachse t einem Netzbezug, also einer Entnahme von Energie aus dem Energieversorgungsnetz 6 entspricht. Wegen teilweiser Überlagerung wurden die Leistungsverläufe P2 und P3 zur besseren Sichtbarkeit geringfügig vertikal verschoben.

In der Ladevorrichtung 3 bzw. der Steuereinrichtung 27 sind zwei Ladeströme bzw. Ladeleistungen vorgegeben, und zwar P_{L1} = 2500 W und P_{L2} = 5000 W. Da die Spannung des Hausversorgungsnetzes 16 immer annähernd konstant ist, kann eine maximal erlaubte Ladeleistung auch über die voreingestellten Ladeströme l_{Li} eingestellt werden.

Der Einfachheit halber wird im Folgenden davon ausgegangen, dass ein an die Ladevorrichtung 1 angeschlossenes Elektrofahrzeug 11 immer den an das Elektrofahrzeug 11 als maximal erlaubten, von der Ladevorrichtung 1 kommunizierten, Ladestrom bzw. Leistung bezieht und nicht weniger.

Der erste Leistungsverlauf P1 (durchgezogene Linie) zeigt die ermittelte Leistung bzw. Energie in einem beispielhaften Fall, dass die Ladevorrichtung 3 für das Bereitstellen von Energie deaktiviert ist (dritter Betriebsmodus). In Abhängigkeit der Zeit t wird einmal mehr und einmal weniger Leistung bzw. Energie in das Energieversorgungsnetz 6 eingespeist bzw. bezogen.

Der zweite Leistungsverlauf P2 (strichlierte Linie) ist eine Überlagerung aus dem ersten Leistungsverlauf P1 in Kombination mit einer aktivierten Ladevorrichtung im erfindungsgemäßen Betriebsmodus "Energiemanagement-Steuerung". Dabei betragen die Ein- und Ausschaltschaltschwellwerte für die voreingestellten Ladeleistungen P_{L1} und P_{L2} beispielsweise: ESSW1 = 2500 W; ASSW1 = 1000 W; ESSW2 = 2500 W; ASSW2 = 1000 W. Zum Zeitpunkt t₂ wird der erste Einschaltschwellwert ESSW1 erreicht bzw. überschritten und die erste voreingestellte Ladeleistung P_{L1} aktiviert. Durch die Aktivierung der Ladung mit der voreingestellten Ladeleistung P_{L1} verringert sich die eingespeiste Leistung um die 2500 W auf 0W. Zum Zeitpunkt t₃ wird der erste Ausschaltschwellwert ASSW1 überschritten und dadurch die erste Ladeleistung P_{L1} wieder deaktiviert. Die Leistung P verändert sich dadurch auf 1500 W eingespeiste Leistung. Zum Zeitpunkt t₄ wird der erste Einschaltschwellwert ESSW1 wieder überschritten und die erste voreingestellte Ladeleistung P_{L1} wieder aktiviert, wodurch die eingespeiste Leistung P wieder auf 0 W verändert bzw. verringert wird. Zum Zeitpunkt t₆ wird der zweite Einschaltschwellwert ESSW2 überschritten und die zweite voreingestellte Ladeleistung P_{L2} aktiviert, wodurch die eingespeiste Leistung P wieder um 2500 W auf 0 W verändert bzw. verringert wird.

Der dritte Leistungsverlauf P3 (strich-punktierte Linie) ist eine Überlagerung aus dem ersten Leistungsverlauf P1 in Kombination mit einer aktivierten Ladevorrichtung 3 im Betriebsmodus "Energiemanagement-Steuerung" mit anderen Ein- und Ausschaltschwellwerten: ESSW1' = 1000 W; ASSW1' = 3000 W; ESSW2' = 2000 W; ASSW2' = 2500 W. Zum Zeitpunkt t₁ wird der erste Einschaltschwellwert ESSW1' überschritten und dementsprechend die zugehörige voreingestellte Ladeleistung P_{L1}' aktiviert. Durch Aktivieren der ersten voreingestellten Ladeleistung P_{L1}' verringert sich die eingespeiste Leistung P auf 1500 W Netzbezug. Zu einem Zeitpunkt t₅ wird der zweite Einschaltschwellwert ESSW2' überschritten und die zugehörige zweite voreingestellte Ladeleistung P_{L2}' aktiviert. Durch Aktivieren der zweiten voreingestellten Ladeleistung P_{L2}' verändert sich die eingespeiste Leistung P auf 500 W Netzbezug.

Die Einschaltschwellwerte ESSWi und Ausschaltschwellwerte ASSWi für das Zu- und Wegschalten bzw. Aktivieren und Deaktivieren der voreingestellten Ladeströme l_{Li} bzw. Ladeleistungen P_{Li} können beispielsweise über eine Benutzeroberfläche einer Energiemanagementeinrichtung 20 konfiguriert werden sowie damit zu erfolgende Vergleich mit der Einspeise- oder Produktionsleistung ausgewählt. Zu jedem voreingestellten Ladestrom l_{Li} bzw. Ladeleistung P_{Li} existiert jeweils ein Einschaltschwellwert ESSWi und ein Ausschaltschwellwert ASSWi.

Die Einschaltschwellwerte ESSWi dienen üblicherweise zum Vergleich mit der Leistung einer Energieerzeugungsanlage 1, welche in das Energieversorgungsnetz 6 eingespeist wird, und die Ausschaltschwellwerte ASSWi dienen üblicherweise zum Vergleich mit der Leistung, welche aus einem Energieversorgungsnetz 6 bezogen wird. Optional können die Einschaltschwellwerte ESSW auch mit der Leistung, welche die Energieerzeugungsanlage 1 produziert verglichen werden. Das macht beispielsweise dann Sinn, wenn die Energieerzeugungsanlage 1 nicht an ein Energieversorgungsnetz 6 angeschlossen ist oder so betrieben wird, dass nicht in das Energieversorgungsnetz 6 eingespeist wird.

Im hauptsächlichen Fall, in dem der Ausschaltschwellwert ASSWi auf einen Netzbezug und der Einschaltschwellwert ESSWi auf eine Einspeisung bezogen wird, ist die sogenannte Schwellwertspreizung die Summe aus dem Einschaltschwellwert ESSWi und dem Ausschaltschwellwert ASSWi desselben vorgegebenen Ladestroms l_{Li}, also ESSWi + ASSWi. Bei der Festlegung der Ein- und Ausschaltschwellwerte wird vorzugsweise berücksichtigt, dass die Schwellwertspreizung größer ist, als die Strom- bzw. Leistungsdifferenz zwischen dem zugehörigen voreingestellten Ladestrom und dem nächst kleineren voreingestellten Ladestrom.

Eine bestimmte Schwellwertspreizung kann beliebig in ihrer Lage verschoben werden, in dem z.B. der Einschaltschwellwert ESSW um einen gewissen Betrag erhöht wird und der Ausschaltschwellwert ASSW um denselben Betrag verringert wird. Dadurch wird ein voreingestellter Ladestrom erst bei einer höheren Einspeisung aktiviert und bereits bei einem niedrigeren Netzbezug deaktiviert. Es kann auch umgekehrt der Einschaltschwellwert ESSWi um einen gewissen Betrag verringert werden während der Ausschaltschwellwert ASSWi um denselben Betrag erhöht wird. Hierbei bleibt ebenfalls die Schwellwertspreizung ESSWi + ASSWi unverändert, nur wird ein voreingestellter Ladestrom bereits bei einer niedrigeren Einspeisung aktiviert und erst bei einem höheren Netzbezug deaktiviert. Der Vorteil liegt darin, dass das Energiemanagement die Ladevorrichtung 3 bzw. Steuereinrichtung 27 mittels der Lage der Schwellwertspreizung entweder für kürzere Ladezeiten eines Elektrofahrzeugs 11 durch Einräumen eines höheren Anteiles an Netzbezug, oder für verbesserte Nutzung der von einer Energieerzeugungsanlage 1 möglicherweise unwirtschaftlich in ein Energieversorgungsnetz 6 eingespeisten Energie für die Ladung ansteuern kann. Bei Energieerzeugungsanlagen 1 die saisonalen oder sonstigen vorhersehbaren Schwankungen unterliegen, oder bei gewissen oder geänderten Gewohnheiten der Nutzung eines Elektrofahrzeugs 11 kann es darüber hinaus für eine zufriedenstellende Energieversorgung des Elektrofahrzeugs 11 von Vorteil sein, die Lage der Schwellwertspreizung an diese Schwankungen und Gewohnheiten anzupassen. Die Anpassung erfolgt entweder manuell in einer Energiemanagementeinrichtung 27 oder wird für die Zukunft vorprogrammiert. Beispielsweise kann die Schwellwertspreizung in Abhängigkeit von Jahreszeit, Wochentag, Wochenende, Arbeitstag, Urlaub und weiteren denkbaren Parametern innerhalb eines vordefinierten Rahmens festgelegt werden.

Unter besonderen Bedingungen kann es auch sinnvoll sein, einen Einschaltschwellwert ESSW für den Vergleich mit einer Einspeisung und einen Ausschaltschwellwert ASSW für den Vergleich mit einer Einspeisung zu definieren. Damit ist es z.B. möglich, die Ladevorrichtung 3 mittels reinem Netzbezug zu betreiben und Leistungsspitzen, für die höhere Tarife anfallen, zu begrenzen.

Für die Ansteuerung der Ladevorrichtung 3 bzw. Steuereinrichtung 27 wird ein Vergleich der ermittelten Leistungen auf Überschreitung der Ein- und Ausschaltschwellwerte durchgeführt. Es ist auch eine Definition von negativen Schwellwerten oder anderen Werten denkbar, wo bei einer Prüfung ein Vergleich einer Einspeisung oder eines Netzbezuges mit den Schwellwerten auf Unterschreitung von Schwellwerten stattfindet.

Folgend wird der Einfachheit halber nur mehr auf die Variante mit den Überschreitungen eingegangen.

Die Prüfung kann ergeben, dass:
a) kein Schwellwert überschritten wird
b) der ESSWi überschritten wird
c) der ASSWi überschritten wird

In Fall a) wird vom Energiemanagement der zuletzt aktivierte voreingestellte Ladestrom beibehalten.

In Fall b) wird vom Energiemanagement der zu diesem ESSWi gehörende voreingestellte Ladestrom aktiviert und der zuletzt aktive voreingestellte Ladestrom deaktiviert.

In Fall c) wird vom Energiemanagement die zu diesem ASSWi gehörende voreingestellte Ladestrom deaktiviert und ein kleinerer voreingestellter Ladestrom mit passendem ESSWi aktiviert. Falls der ASSWi für den kleinsten voreingestellten Ladestrom überschritten wird, wird die Bereitstellung von Energie in der Ladevorrichtung 3 deaktiviert. Für den kleinsten voreingestellten Ladestrom kann es auch sinnvoll sein, den zugehörigen Einschaltschwellwert ESSWi und Ausschaltschwellwert ASSWi so festzulegen, dass zumindest der kleinste voreingestellte Ladestrom aktiviert ist bzw. am Beginn eines Betriebsmodus aktiviert wird. So kann für eine kontinuierliche langsame Batterieladung eine allfällig geringe Einspeisung bzw. Produktion einer Energieerzeugungsanlage 1 für die Ladung verwendet werden, anstatt diese Energie in ein Energieversorgungsnetz 6 einzuspeisen.

## Patentansprüche

1. Verfahren zum Laden eines Elektrofahrzeuges (11) mit einem Ladestrom (l_{L}) aus einem mit einer Energieerzeugungsanlage (1), einem Energieversorgungsnetz (6), einer Energiemanagementeinrichtung (20), und allenfalls einem Energiespeicher (5) verbundenen Hausversorgungsnetz (16), wobei der Ladestrom (l_{L}) zum Laden des Elektrofahrzeuges (11) über eine Steuereinrichtung (27) gesteuert wird, **dadurch gekennzeichnet, dass** die Steuereinrichtung (27) mit der Energiemanagementeinrichtung (20) verbunden wird, und für die Steuereinrichtung (27) zumindest zwei Ladeströme (l_{Li}) voreingestellt werden, und das Elektrofahrzeug (11) mit einem Ladestrom (l_{L}) geladen wird, der in Abhängigkeit der Energiemanagementeinrichtung (20) entsprechend einem der zumindest zwei voreingestellten Ladeströme (l_{Li}) bereitgestellt wird.

2. Verfahren nach Anspruch 1, **dadurch gekennzeichnet, dass** für jeden der zumindest zwei voreingestellten Ladeströme (l_{Li}) jeweils ein Einschaltschwellwert (ESSWᵢ) und ein Ausschaltschwellwert (ASSWᵢ) festgelegt wird, und dass der Ladestrom (l_{L}) zum Laden des Elektrofahrzeuges (11) aus den zumindest zwei voreingestellten Ladeströmen (l_{Li}) ausgewählt wird, indem die überschüssige Energie des Hausversorgungsnetzes (16) sowie die aus dem Energieversorgungsnetz (6) bezogene Energie ermittelt und mit zumindest je einem Einschaltschwellwert (ESSWᵢ) und bzw. oder Ausschaltschwellwert (ASSWᵢ) verglichen wird, und bei Erreichen der entsprechenden Einschaltschwellwerte (ESSWᵢ) oder Ausschalschwellwerte (ASSWᵢ) der entsprechende voreingestellte Ladestrom (l_{Li}) aktiviert oder deaktiviert wird.

3. Verfahren nach Anspruch 2, **dadurch gekennzeichnet, dass** die ermittelte überschüssige Energie des Hausversorgungsnetzes (16) mit den Einschaltschwellwerten (ESSWᵢ) und die ermittelte aus dem Energieversorgungsnetz (6) bezogene Energie mit den Ausschaltschwellwerten (ASSWᵢ) verglichen wird, und der entsprechende voreingestellte Ladestrom (l_{Li}) aktiviert oder deaktiviert wird.

4. Verfahren nach Anspruch 2, **dadurch gekennzeichnet, dass** die ermittelte in das Energieversorgungsnetz (6) eingespeiste Energie mit den Einschaltschwellwerten (ESSWᵢ) und mit den Ausschaltschwellwerten (ASSWᵢ) verglichen wird, und der entsprechende voreingestellte Ladestrom (l_{Li}) aktiviert oder deaktiviert wird, oder die ermittelte aus dem Energieversorgungsnetz (6) bezogene Energie mit den Einschaltschwellwerten (ESSWᵢ) und mit den Ausschaltschwellwerten (ASSWᵢ) verglichen wird, und der entsprechende voreingestellte Ladestrom (l_{Li}) aktiviert oder deaktiviert wird.

5. Verfahren nach einem der Ansprüche 2 bis 4, **dadurch gekennzeichnet, dass** das Laden des Elektrofahrzeuges (11) gestoppt wird, wenn die ermittelte vom Energieversorgungsnetz (6) bezogene Energie den Ausschaltschwellwert (ASSWᵢ) des kleinsten voreingestellten Ladestroms (l_{Li}) überschreitet.

6. Verfahren nach einem der Ansprüche 2 bis 5, **dadurch gekennzeichnet, dass** die Aktivierung eines voreingestellten Ladestroms (l_{Li}) über eine wählbare Mindestzeit beibehalten wird.

7. Verfahren nach einem der Ansprüche 1 bis 6, **dadurch gekennzeichnet, dass** ein Zeitfenster eingestellt wird, und dass der Ladestrom (l_{L}) zum Laden des Elektrofahrzeuges (11) unter Berücksichtigung des eingestellten Zeitfensters entsprechend einem der zumindest zwei voreingestellten Ladeströme (l_{Li}) bereitgestellt wird.

8. Verfahren nach einem der Ansprüche 1 bis 7, **dadurch gekennzeichnet, dass** auf einen Betriebsmodus zum Laden des Elektrofahrzeuges mit einem fix vorgegebenen Ladestrom und bzw. oder auf einen Betriebsmodus zum Deaktivieren der Bereitstellung von Energie umgeschaltet wird.

9. Verfahren nach einem der Ansprüche 1 bis 8, **dadurch gekennzeichnet, dass** die Steuerung des Ladestroms (l_{L}) zum Laden des Elektrofahrzeuges (2) ferngesteuert wird.

10. Vorrichtung (3) zum Laden eines Elektrofahrzeuges (11) mit einem Ladestrom (l_{L}), mit einem Anschluss (30) zur Verbindung mit einem mit einer Energieerzeugungsanlage (1), einem Energieversorgungsnetz (6), einer Energiemanagementeinrichtung (20), und allenfalls einem Energiespeicher (5) verbundenen Hausversorgungsnetz (16), mit einem Ladeanschluss (31) zur Verbindung mit dem zu ladenden Elektrofahrzeug (11), und mit einer Steuereinrichtung (27) zur Steuerung des Ladestroms (l_{L}) zum Laden des Elektrofahrzeuges (11) **dadurch gekennzeichnet, dass** die Steuereinrichtung (27) zur Verbindung mit der Energiemanagementeinrichtung (20) ausgebildet ist, und dass zumindest zwei Ladeströme (l_{Li}) voreinstellbar sind, sodass der Ladestrom (l_{L}) zum Laden des Elektrofahrzeuges (11) in Abhängigkeit der Energiemanagementeinrichtung (20) entsprechend einem der zumindest zwei voreingestellten Ladeströme (l_{Li}) bereitgestellt ist.

11. Vorrichtung (3) nach Anspruch 10, **dadurch gekennzeichnet, dass** für jeden der zumindest zwei voreingestellten Ladeströme (l_{Li}) jeweils ein Einschaltschwellwert (ESSWᵢ) und ein Ausschaltschwellwert (ASSWᵢ) festlegbar ist, und dass zumindest eine Einrichtung zur Ermittlung der überschüssigen Energie des Hausversorgungsnetzes (16) und der vom Energieversorgungsnetz (6) bezogenen Energie und zum Vergleich mit zumindest einem Einschaltschwellwert (ESSWᵢ) und bzw. oder Ausschaltschwellwert (ASSWᵢ) vorgesehen ist, und dass die Steuereinrichtung (27) dazu ausgebildet ist, dass der Ladestrom (l_{L}) zum Laden des Elektrofahrzeuges (11) entsprechend den zumindest zwei voreingestellten Ladeströmen (l_{Li}) bereitgestellt wird, indem bei Erreichen der entsprechenden Einschaltschwellwerte (ESSWᵢ) oder Ausschaltschwellwerte (ASSWᵢ) der entsprechende voreingestellte Ladestrom (l_{Li}) aktiviert oder deaktiviert wird.

12. Vorrichtung (3) nach Anspruch 10 oder 11, **dadurch gekennzeichnet, dass** eine Umschalteinrichtung (26) zum Umschalten auf einen Betriebsmodus zum Laden des Elektrofahrzeuges mit einem fix vorgegebenen Ladestrom und bzw. oder auf einen Betriebsmodus zum Deaktivieren der Bereitstellung von Energie vorgesehen ist.

13. Vorrichtung (3) nach einem der Ansprüche 10 bis 12, **dadurch gekennzeichnet, dass** die Steuereinrichtung (27) zur Verbindung mit einem die Energiemanagementeinrichtung (20) bildenden Wechselrichter (17) einer Photovoltaikanlage ausgebildet ist.

14. Vorrichtung (3) nach einem der Ansprüche 10 bis 12, **dadurch gekennzeichnet, dass** die Steuereinrichtung (27) zur Verbindung mit einem die Energiemanagementeinrichtung (20) bildenden Stromzähler (2) ausgebildet ist.

15. Vorrichtung (3) nach einem der Ansprüche 10 bis 14, **dadurch gekennzeichnet, dass** eine Einrichtung zum Auswählen eines Zeitfensters vorgesehen ist, sodass der Ladestrom (l_{L}) zum Laden des Elektrofahrzeuges (11) unter Berücksichtigung des ausgewählten Zeitfensters bereitgestellt ist.
